(19) Europäisches Patentamt
European Patent Office
Office européen des brevets

(11) Publication number: 0 495 345 B1

(12) **EUROPEAN PATENT SPECIFICATION**

(45) Date of publication of patent specification: **02.11.94**

(51) Int. Cl.5: **B01D 19/04**, C11D 3/00, C11D 3/37, C11D 3/16

(21) Application number: **91870007.1**

(22) Date of filing: **16.01.91**

The file contains technical information submitted after the application was filed and not included in this specification

(54) **Foam control agents in granular form.**

(43) Date of publication of application:
**22.07.92 Bulletin 92/30**

(45) Publication of the grant of the patent:
**02.11.94 Bulletin 94/44**

(84) Designated Contracting States:
**AT BE CH DE DK ES FR GB GR IT LI LU NL SE**

(56) References cited:
**EP-A- 0 143 315**
**EP-A- 0 210 731**
**EP-A- 0 382 464**
**FR-A- 2 194 771**
**US-A- 4 013 573**

(73) Proprietor: **THE PROCTER & GAMBLE COMPANY**
**One Procter & Gamble Plaza**
**Cincinnati Ohio 45202 (US)**

(72) Inventor: **De Cupere, Marcel Joseph Jean**
**Op de Vliet 14**
**B-3010 Kessel-Lo (BE)**

(74) Representative: **Canonici, Jean-Jacques et al**
**Procter & Gamble European Technical Center N.V.**
**Temselaan 100**
**B-1853 Strombeek-Bever (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 495 345 B1

## Description

The present invention is concerned with foam control agents in granular form and with detergent compositions containing such agents.

It has become common practice in the detergent industry to include in detergent compositions materials which are intended to control the amount of foam produced during a washing cycle in a washing machine.

Indeed, excessive sudsing has been found to interfere negatively with the action of the wash liquor upon the fabrics.

Silicone antifoam agents have been found to be particularly effective species, and efforts have been directed to increase the stability of such agents upon prolonged storage of the detergent compositions containing them.

In GB 1,492,939, it has been proposed to coat silicone antifoam agents with an organic material which is a water soluble or water dispersible, substantially non-surface active, detergent-impermeable material e.g. gelatin, agar or certain reaction products of tallow alcohol and ethylene oxide.

In EP-A-210 721, it has been proposed to coat silicone antifoam agents with water-insoluble fatty acid or fatty alcohols, and in EP-A-210 731 it has been disclosed to coat silicone antifoam agents with a monoester of glycerol and a fatty acid.

While such antifoam agents in granulate form appear to exhibit desirable stability upon storage, when incorporated in detergent compositions, it has been found that such antifoam granulates were not ideally suited for an easy incorporation into detergent compositions in powder form, such as dry-mixing.

It is thus the object of the present invention to provide storage-stable foam controlling agents, in the form of granulates which are free flowing and easily processable into a detergent composition.

The present invention provides a stable, free-flowing foam-control agent in granular form for inclusion in a detergent composition in powder form, comprising a silicone antifoam compound, a carrier material, preferably starch, an organic coating material, characterized in, that it contains glycerol, at a weight ratio with the silicone antifoam compound of 1:2 to 3:1.

The present invention also provides detergent compositions containing a surface-active agent, said foam control agent, and optionally other detergent ingredients.

<u>The silicone antifoam compound</u>

The silicone antifoam compound is present in the foam-control agents of the invention, at levels of from 5% to 20% by weight, preferably 8% to 15% by weight.

In industrial practice, the term "silicone" has become a generic term which encompasses a variety of relatively high-molecular-weight polymers containing siloxane units and hydrocarbyl groups of various types. Generally, the silicone suds-controllers can be described as siloxanes having the general structure :

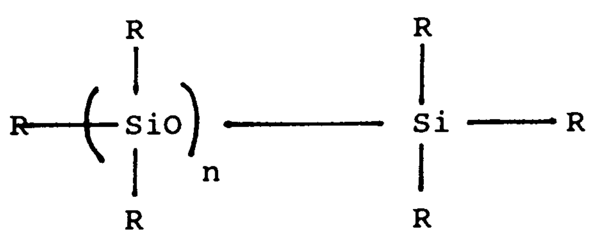

where each R independently can be an alkyl or an aryl radical. Examples of such substituents are methyl, ethyl, propyl, isobutyl, and phenyl. Preferred polydiorganosiloxanes are polydimethylsiloxanes having trimethylsilyl endblocking units and having a viscosity at 25°C of from 5 x $10^{-5}$ $m^2/s$ to 0.1$m^2/s$ i.e. a value of <u>n</u> in the range 40 to 1500. These are preferred because of their ready availability and their relatively low cost.

A preferred type of silicone antifoam agent useful in the compositions herein comprises a mixture of an alkylated siloxane of the type hereinabove disclosed and solid silica.

The solid silica can be a fumed silica, a precipitated silica or a silica made by the gelformation technique. The silica particles suitably have an average particle size of from 0.1 to 50 µm, preferably from 1 to 20 µm and a surface area of at least 50$m^2$/g. These silica particles can be rendered hydrophobic by

treating them with dialkylsilyl groups and/or trialkylsilyl groups either bonded directly onto the silica or by means of a silicone resin. It is preferred to employ a silica the particles of which have been rendered hydrophobic with dimethyl and/or trimethyl silyl groups. Silicone antifoams employed in a foam control agent according to the invention suitably have an amount of silica in the range of 1 to 30% (more preferably 2.0 to 15%) by weight of the total weight of the silicone antifoam resulting in silicone antifoams having an average viscosity in the range of from 2 x $10^{-4}$ $m^2/s$ to $1m^2/s$. Preferred silicone antifoams may have a viscosity in the range of from 5 x $10^{-3}m^2/s$ to $0.1m^2/s$. Particularly suitable are silicone antifoams with a viscosity of 2 x $10^{-2}m^2/s$ or 4.5 x $10^{-2}m^2/s$.

The carrier material

The carrier material for use herein provides the solid basis on which the silicone antifoam agent, the organic coating material, and the glycerol are deposited during manufacture; the carrier material must therefore be in the form of solid particles, which are compatible with detergent ingredients, are water-soluble or water-dispersible to facilitate the dispersion of the silicone antifoam agent in the agueous liquor during the wash cycle, and are capable to absorb or adsorb the silicone antifoam agent.

The carrier material is present in the present foam control agents at levels of from 40% to 80% by weight, preferably 55% to 65% by weight.

A preferred carrier material for use in foam control agents according to the invention is starch, native or chemically modified both hot or cold gelling in water; other suitable materials are kieselguhr and Fuller's earth.

It is also possible to choose carrier particles for use herein, among ingredients which themselves play an active role in the laundering or washing process. Examples of such materials are zeolites, sodium tripolyphosphate (STPP) particles, sodium sulphate, sodium carbonate, carboxymethylcellulose and clay minerals.

The organic coating material

The organic coating material is present at levels of from 5 to 30% of the antifoam agents according to the invention, preferably from 8% to 22% by weight.

Organic coating material suitable for use in the granules of the present invention, can be water soluble/dispersible species, water-insoluble species, or a mixture thereof.

Water-soluble or water-dispersible coating materials must be impermeable to detergent and must be substantially non-surface active. By substantially non-surface active is meant that the coating material, itself, does not interact with the silicone material in such fashion that it is emulsified or otherwise excessively dispersed throughout an aqueous medium, rather than at the air/water interface.

A wide variety of coating materials having the requisite solubility/dispersibility characteristics and the essential features of being non-surface active and detergent-impermeable are known. For example, the high-molecular-weight Carbowaxes ("Carbowax" is a trade mark) which have substantially not surface-active characteristics are useful herein. Examples of this type of material include the polyethyleneglycols having a molecular weight of from about 1,500 to about 10,000, especially about 4,000. Highly ethoxylated fatty alcohols such as tallow alcohol condensed with about 25 molar proportions of ethylene oxide are useful herein. Other alcohol condensates containing extremely high ethoxylate proportions (ca. 80) are also useful herein. Such high ethoxylates apparently lack sufficient surface-active characteristics to interact or otherwise interfere with the desired suds-control properties of the silicone agents herein. A particularly preferred ethoxylated coating material herein is tallow alcohol condensed with about 80 molar proportions of ethylene oxide, and abbreviated $TAE_{80}$.

A variety of other materials useful as water-soluble/dispersible coating agents herein may also be mentioned : gelatin; agar; gum arabic; and various algae-derived gels.

Water-insoluble organic materials suitable for use in a foam control agent according to the invention are water-insoluble fatty acids, fatty alcohols, fatty acid esters and mixtures thereof. Fatty acids or fatty alcohols are species which have from 10 to 20 carbon in their alkyl chain.

Suitable fatty acids are saturated or unsaturated and can be obtained from natural sources such as, for example, plant or animal esters (e.g. palm oil, coconut oil, babassu oil, safflower oil, taloil, castor oil, tallow and fish oils, grease, and mixtures thereof) or can be synthetically prepared for example via the oxidation of petroleum or by hydrogenation of carbon monooxide via the Fisher-Tropsch process. Examples of suitable fatty acids for use in the present invention include capric, lauric, myristic, palmitic, stearic, arachidic and behenic acid.

Preferred is stearic acid. Also preferred is tallow ($C_{16}$-$C_{18}$) fatty acid. Alcohols derived from the above-mentioned fatty acids are suitable for the foam control agents herein, stearic alcohol and tallow ($C_{16}$-$C_{18}$) alcohol being preferred.

Esters of the above-mentioned fatty acids with $C_{1-3}$ alcohols are also suitable, such as ethyl myristate, ethyl stearate, methyl palmitate, and glycerol mono stearate, this latter species being especially preferred.

Among the above water-insoluble fatty materials, stearyl acid and stearyl alcohol are especially preferred. These materials are preferred because of their good performance, easy availability and suitable melting point. The melting points of stearic acid and stearyl alcohol are 71.5 and 59.4°C respectively at which temperatures they are insoluble in water. These materials do not appear to interfere with the effectiveness of the silicone antifoam when it is released into the washing liquor.

Mixtures of the above water-soluble/dispersible coating agents and of the above water-insoluble organic materials herein are also suitable. A preferred mixture is stearyl alcohol and $TAE_{80}$.

The amount of organic coating material employed in the foam control agents herein should be no less than 1 part organic coating material per part of silicone antifoam. It is preferred to employ the organic coating material and the silicone antifoam in a weight ratio in the range 5:1 to 1:1, more preferably in the range 4:1 to 2:1.

The glycerol is a key ingredient of the foam control agents herein; it is believed to strengten the adsorption of silicone antifoam compound to the carrier particles. Glycerol is present at a weight ratio of 1:2 to 3:1 with the silicone antifoam agent, and at levels of from 4 to 20%, preferably 8% to 15% of the foam control agents herein.

## Optional ingredients

The foam control agents may comprise, in addition to the essential ingredients described hereinabove, optional ingredients, such as waxes, and anti-caking agents.

Preferred waxes are of mineral origin, especially those derived from petroleum, including microcrystalline and oxidised microcrystalline petroleum waxes and paraffin waxes. However synthetic waxes, or natural waxes such as Montan waxes, beeswax, candelilla or carnauba waxes may also be used as may a mixture of any of these waxes. Whatever wax is used it is preferred that its melting point is between 35° and 70°C so that it is readily liquifiable.

Suitable anti-caking agents include alkoxylated nonionic surfactants such as described hereinafter.

## Making process for the anti-foam agent of the invention

The process is as follows :

The silicone antifoam compound and the glycerol, at a weight ratio such as presently claimed, are mixed together and the mixture is added to the carrier material, which is preferably starch; the mixing then takes place in an Eirich mixer. During the mixing, the temperature raises due to the agitation. When the temperature reaches a value in the range of from 30 to 35°C, the organic coating material, is added in the molten state (e.g. at 85°C, if stearyl alcohol), and the mixing is continued used until approximately 5 minutes after the melting temperature of the organic coating agent is reached (56 to 58°C for stearyl alcohol).

Granulation has then taken place, and the granules are cooled to room temperature in a fluid bed.

## Detergent compositions

In another embodiment of the present invention, it is herewith provided a detergent composition in powder form, comprising a surface-active agent and a foam control agent such as described above. The amount of foam control agents is from 0.25 to 10%, preferably from 0.5 to 3 by weight of the total detergent composition.

Suitable surface-active agents are of the anionic, cationic, non-ionic or amphoteric type, or mixtures thereof. Suitable anionic organic detergent surfactants include alkali metal soaps of higher fatty acids, alkyl aryl sulphonates, for example sodium dodecyl benzene sulphonate, long chain (fatty) alcohol sulphates, olefine sulphates and sulphonates, sulphated monoglycerides, sulphated ethers, sulphosuccinates, alkane sulphonates, phosphate esters, alkyl isothionates, sucrose esters and fluorosurfactants. Suitable cationic organic detergent surfactants include alkyl-amine salts, quaternary ammonium salts, sulphonium salts and phosphonium salts. Suitable non-ionic organic surfactants include condensates of ethylene oxide with a long chain (fatty) alcohol or fatty acid, for example $C_{14-15}$ alcohol, condensed with 7 moles of ethylene oxide

(Dobanol ® 45-7), condensates of ethylene oxide with an amine or an amide, condensation products of ethylene and propylene oxides, fatty acid alkylol amides and fatty amine oxides. Suitable amphoteric organic detergent surfactants include imidazoline compounds, alkylaminoacid salts and betaines.

The detergent compositions herein preferably also contain a builder, which is preferably a non-phosphate species; accordingly, the builder herein preferably is selected from aluminosilicate ion exchangers (zeolites), and water-soluble monomeric or oligomeric carboxylate chelating agents such as citrates, succinates, oxydisuccinates, as well as mixtures of the above species.

Other suitable builder materials include alkali metal carbonates, bicarbonates and silicates, organic phosphonates, amino polyalkylene phosphonates and amino polycarboxylates, ethylene diamine tetraacetic acid and nitrilotriacetic acid. Other suitable water-soluble organic salts are the homo- or co-polymeric polycarboxylic acids or their salts in which the polycarboxylic acid comprises at least two carboxyl radicals separated from each other by not more than two carbon atoms. Polymers of this type are disclosed in GB-A-1,596,756. Examples of such salts are polyacrylates of MW 2000-5000 and their copolymers with maleic anhydride, such copolymers having a molecular weight of from 20,000 to 70,000, especially about 40,000.

Other ingredients which typically form part of a detergent composition in powder form include bleaching agents, such as sodium perborate and percarbonate, bleach activators, anti redeposition agents such as carboxymethyl cellulase, enzymes, brighteners, fabric softening clays, perfumes, dyes, pigments.

Example

A foam-control agent in granular form is produced, having the following composition :

| ingredients | Example I percent by weight |
|---|---|
| Silicone antifoam compound* | 12% |
| Glycerol | 12% |
| Stearyl Alcohol | 18% |
| Starch | 58% |

* Polydimethyl siloxane/fumed silica X2/3419 from Dow Corning

A quantity of 3.4 kg of the above foam control agent in granular form is produced, starting from 0.4 kg silicone antifoam agent, 0.4 kg glycerol, 2 kg starch, and 0.6 kg stearyl alcohol in molten state. The process is described hereinabove.

The above granulates are crispy and free flowing; they are incorporated in a detergent composition in powder form, by dry-mixing.

Thanks to the quality of the granulates, this incorporation into the detergent composition does not raise any processing difficulty.

Typical detergent compositions in powder form in which the present antifoam agents in granular form are included have the following formulae :

| Ingredients | (all levels in % by weight) Ex. II | Ex. III |
|---|---|---|
| LAS | 8.00 | 6.50 |
| TAS | 2.50 | 3.35 |
| FA45E7 | 5.00 | 2.00 |
| Na citrate/citric acid | ---- | 12.00 |
| Zeolite 4A | 24.00 | 16.00 |
| Copolymer AA/MA | 5.00 | 3.50 |
| Phosphonate | 0.60 | ---- |
| EDTA | 0.25 | 0.30 |
| Na carbonate | 17.00 | 10.00 |
| Silicate (R=2) | 2.00 | 2.50 |
| CMC | 0.50 | ---- |
| Clay | ---- | 8.50 |
| PB1 | 13.00 | ---- |
| PB4 | ---- | 12.00 |
| TAED | 5.70 | 3.20 |
| Enzyme | 1.70 | 1.70 |
| Foam control agent | 0.70 | 0.80 |
| Minors + water | balance to 100% | |

The abbreviations for the individual ingredients have the following meaning :

| | |
|---|---|
| LAS : | sodium salt of linear dodecyl benzene sulfonate |
| TAS : | sodium salt of tallow alcohol sulfate |
| FA45E7 : | fatty alcohol ($C_{14}$-$C_{15}$) ethoxylated with about 7 moles of ethylene oxide |
| Clay : | smectite clay |
| Zeolite 4A : | sodium salt of zeolite 4A with average particle size between 1-10 micrometer |
| Copolymer AA/MA : | copolymer of acrylic acid and maleic acid |
| CMC : | carboxymethylcellulose |
| Phosphonate : | sodium salt of ethylenediamine tetramethylene phosphonic acid |
| EDTA : | sodium salt of ethylenediamine tetra acetate |
| PB1 : | NaBO2.H2O2 (Sodium Perborate Monohydrate) |
| PB4 : | NaBO2.H2O2.3H2O (Sodium Perborate Tetrahydrate) |
| TAED : | tetra acetyl ethxlene diamine |

## Claims

1. A stable, free-flowing foam-control agent in granular form for inclusion in a detergent composition in powder form, comprising a silicone antifoam compound, a carrier material, an organic coating material, characterized in, that it contains glycerol, at a weight ratio with the silicone antifoam compound of 1:2 to 3:1.

2. A foam control-agent according to claim 1 wherein the silicone antifoam compound comprises a polydiorganosiloxane and solid silica.

3. A foam-control agent according to claims 1-2 wherein the carrier material is starch.

4. A foam-control agent according to claims 1-3 wherein the organic coating agent is selected from water-soluble or water-dispersible, substantially non-surface active, detergent impermeable materials, from water-insoluble fatty acids, and/or fatty alcohols and/or fatty acid esters, and from mixtures thereof.

5. A foam-control agent according to claim 4 wherein the water-soluble/dispersible, organic coating agent is selected from highly ethoxylated fatty alcohols, condensed with about 25 molar to 80 molar proportions of ethylene oxide.

6. A foam-control agent according to claim 4 wherein the water-insoluble fatty acid and/or fatty alcohols have a carbon chain length of from 12 to 20 carbon atoms and a melting point in the range of from 45 °C to 80 °C.

7. A foam-control agent according to claims 5 and 6 wherein the organic coating agent is selected from stearic acid, stearyl alcohol, tallow fatty, tallow fatty alcohol, tallow alcohol condensed with about 80 molar proportions of ethylene oxide, and mixtures thereof.

8. A foam-control agent according to claims 1-7 which contains 5 to 20% of silicone antifoam agent, from 40% to 80% of carrier material, from 5 to 30% of organic coating material, and from 4 to 20% of glycerol.

9. A method of making a foam-control agent according to claim 1, wherein the silicone anti-foam agent and glycerol are mixed together and added to the carrier material, the organic coating agent is then added, and mixing/granulation follows.

10. A detergent composition in powder form comprising a surface-active agent, and a foam-control agent according to any of claims 1-8.

**Patentansprüche**

1. Stabiles, frei-fließendes, schaumregulierendes Mittel in körniger Form zum Einschluß in einer Detergenszusammensetzung in Pulverform, welches ein Silikon als Antischaumverbindung, ein Trägermaterial, ein organisches Beschichtungsmaterial umfaßt, dadurch gekennzeichnet, daß es Glycerin in einem Gewichtsverhältnis mit dem Silikon als Antischaumverbindung von 1:2 bis 3:1 enthält.

2. Schaumregulierendes Mittel nach Anspruch 1, worin das Silikon als Antischaumverbindung ein Polydiorganosiloxan und festes Siliciumdioxid umfaßt.

3. Schaumregulierendes Mittel nach den Ansprüchen 1 bis 2, worin das Trägermaterial Stärke ist.

4. Schaumregulierendes Mittel nach den Ansprüchen 1 bis 3, worin das organische Beschichtungsmittel unter wasserlöslichen oder wasserdispergierbaren, im wesentlichen nicht-grenzflächenaktiven, Detergens-undurchlässigen Materialien, unter wasserunlöslichen Fettsäuren und/oder Fettalkoholen und/oder Fettsäureestern und von Gemischen hievon ausgewählt ist.

5. Schaumregulierendes Mittel nach Anspruch 4, worin das wasserlösliche/-dispergierbare organische Beschichtungsmittel unter hoch ethoxylierten Fettalkoholen ausgewählt ist, welche mit etwa 25 molaren bis 80 molaren Anteilen an Ethylenoxid kondensiert sind.

6. Schaumregulierendes Mittel nach Anspruch 4, worin die wasserunlösliche Fettsäure und/oder die wasserunlöslichen Fettalkohole eine Kohlenstoffkettenlänge von 12 bis 20 Kohlenstoffatomen und einen Schmelzpunkt im Bereich von 45 °C bis 80 °C besitzen.

7. Schaumregulierendes Mittel nach den Ansprüchen 5 und 6, worin das organische Beschichtungsmittel unter Stearinsäure, Stearylalkohol, Talgfett, Talgfettalkohol, Talgalkohol, welcher mit etwa 80 molaren Anteilen an Ethylenoxid kondensiert ist, und Gemischen hievon ausgewählt ist.

8. Schaumregulierendes Mittel nach den Ansprüchen 1 bis 7, welches 5 bis 20% an Silikon als Antischaummittel, 40% bis 80% an Trägermaterial, 5% bis 30% an organischem Beschichtungsmaterial

und 4 bis 20% Glycerin enthält.

**9.** Verfahren zur Herstellung eines schaumregulierenden Mittels nach Anspruch 1, worin das Silikon als Antischaummittel und Glycerin gemeinsam vermischt und zu dem Trägermaterial zugesetzt werden, das organische Beschichtungsmittel anschließend zugefügt wird und ein Vermischen/Granulieren folgt.

**10.** Detergenszusammensetzung in Pulverform, umfassend ein grenzflächenaktives Mittel und ein schaumregulierendes Mittel nach einem der Ansprüche 1 bis 8.

## Revendications

**1.** Agent régulateur de moussage stable, s'écoulant librement, sous forme granulaire, à incorporer dans une composition détergente sous forme de poudre, comprenant un composé antimousse silicone, un matériau véhicule, un matériau d'enrobage organique, caractérisé en ce qu'il contient du glycérol, dans un rapport pondéral avec le composé antimousse silicone de 1:2 à 3:1.

**2.** Agent régulateur de moussage selon la revendication 1, dans lequel le composé antimousse silicone comprend un polydiorganosiloxane et de la silice solide.

**3.** Agent régulateur de moussage selon les revendications 1-2, dans lequel le matériau véhicule est de l'amidon.

**4.** Agent régulateur de moussage selon les revendications 1-3, dans lequel l'agent d'enrobage organique est choisi parmi les substances imperméables aux détergents, essentiellement non tensioactives, solubles dans l'eau ou dispersables dans l'eau, parmi les acides gras et/ou les alcools gras et/ou les esters d'acides gras insolubles dans l'eau, et parmi leurs mélanges.

**5.** Agent régulateur de moussage selon la revendication 4, dans lequel l'agent d'enrobage organique soluble/dispersable dans l'eau est choisi parmi les alcools gras hautement éthoxylés, condensés avec des proportions d'environ 25 à 80% en moles d'oxyde d'éthylène.

**6.** Agent régulateur de moussage selon la revendication 4, dans lequel l'acide gras et/ou les alcools gras insolubles dans l'eau possèdent une longueur de chaîne carbonée de 12 à 20 atomes de carbone et un point de fusion dans la gamme de 45 °C à 80 °C.

**7.** Agent régulateur de moussage selon les revendications 5 et 6, dans lequel l'agent d'enrobage organique est choisi parmi l'acide stéarique, l'alcool stéarylique, l'acide gras de suif, l'alcool gras de suif, l'alcool de suif condensé avec des proportions d'environ 80% en moles d'oxyde d'éthylène, et leurs mélanges.

**8.** Agent régulateur de moussage selon les revendications 1-7, qui contient 5 à 20% d'agent antimousse silicone, de 40% à 80% de matériau véhicule, de 5 à 30% de matériau d'enrobage organique et de 4 à 20% de glycérol.

**9.** Procédé de fabrication d'un agent régulateur de moussage selon la revendication 1, dans lequel l'agent antimousse silicone et le glycérol sont mélangés l'un à autre et ajoutés au matériau véhicule, l'agent d'enrobage organique est ensuite ajouté, et le tout est suivi d'une étape de malaxage et de granulation.

**10.** Composition détergente sous forme de poudre, comprenant un agent tensioactif et un agent régulateur de moussage selon l'une quelconque des revendications 1-8.